Europäisches Patentamt

European Patent Office

Office européen des brevets

(11) Veröffentlichungsnummer: **0 421 155 A2**

## (12) EUROPÄISCHE PATENTANMELDUNG

(21) Anmeldenummer: 90117451.6

(22) Anmeldetag: 11.09.90

(51) Int. Cl.5: **B23B 49/00**, B23B 51/10

(30) Priorität: 14.09.89 AT 2149/89

(43) Veröffentlichungstag der Anmeldung:
**10.04.91 Patentblatt 91/15**

(84) Benannte Vertragsstaaten:
**CH DE DK FR GB LI NL SE**

(71) Anmelder: **SFS Stadler Holding AG**
**Nefenstrasse 30**
**CH-9435 Heerbrugg(CH)**

(72) Erfinder: **Kluser, Remo**
**Gerbergasse 9**
**CH-9450 Altstätten(CH)**

(54) **Bohrvorrichtung.**

(57) Mit einer Bohrvorrichtung soll in einen festen Unterbau (16), dessen Oberfläche durch aufgelegte Isolierplatten (17) nicht zugänglich oder sichtbar ist, eine Bohrung mit exakt vorher festgelegter Bohrtiefe hergestellt werden. Zu diesem Zweck ist die Bohrvorrichtung mit einer Anschlageinrichtung (21) versehen. Es ist dabei eine den Bohrer (4) bzw. den Bohrschaft (5) koaxial umschliessende Hülse (6) vorgesehen, deren freies Ende als Stützteil (9) zur Anlage an dem zu bohrenden Werkstück (16) ausgebildet ist und deren einem Bohrantrieb (1) zugewandtes Ende mit einem Tiefenanschlag (8) in einem Führungsteil (7) zusammenwirkt. An der Hülse (6) ist weiters ein Anschlussstutzen (20) vorgesehen, an welchen eine Unterdruckeinrichtung anschliessbar ist, so dass das durch den Bohrer (4) angeförderte Bohrmehl ständig über einen Ringspalt zwischen der Hülse (6) und dem Bohrschaft (5) abgesaugt werden kann.

Fig. 1

## BOHRVORRICHTUNG

Die Erfindung betrifft eine Bohrvorrichtung mit einer einen Bohrer bzw. einen den Bohrer tragenden Bohrschaft koaxial umschliessenden Hülse, wobei zwischen Hülse und Bohrer bzw. Bohrschaft zumindest über einen Teilbereich deren Länge durchgehende Kanäle freibleiben, und wobei dem dem Bohrantrieb zugewandten Endbereich der Hülse ein an einer Unterdruckeinrichtung anschliessbarer Anschlussstutzen zugeordnet ist.

Es ist bereits ein Bohrer, insbesondere Gesteinsbohrer, bekannt geworden (DE-A-3237721), dessen Schaft für das Bohren mit Bohrkleinabsaugung aussen rohrartig glatt und somit wendelfrei ausgeführt ist und eine von der Bohrerkopfspitze an in der Bohrerlängsachse verlaufende zentrale Längsbohrung zum Kernbohren aufweist. Der Bohrschaft ist mit einer Ummantelung nach Art einer Hülse versehen, wobei zwischen dem Bohrschaft und der Ummantelung ein Freiraum gebildet wird, über welchen der Bohrstaub abgesaugt wird. Der äussere Durchmesser der Ummantelung muss zur Schaffung eines Zuluftkanals zwischen der Bohrlochwandung und der Ummantelung kleiner ausgeführt sein als der Bohrerkopfdurchmesser. Diese Ummantelung in Form einer Hülse ist fest mit dem Bohrschaft verbunden und wird also zusammen mit dem Bohrer in die herzustellende Bohrung eingeführt.

Bei der Befestigung von Isolierplatten oder -bahnen auf Dachflächen werden diese vorerst ausgelegt, worauf dann durch die isolierplatten bzw. -bahnen hindurch in den festen Unterbau, beispielsweise in Betonplatten, Bohrungen hergestellt werden müssen, in welche dann selbstklemmende Befestigungselemente oder Dübel eingesetzt werden. Die Isolierplatten bzw. -bahnen haben eine relativ grosse Dicke, wogegen die darunter liegenden, beispielsweise als Betonplatten ausgebildeten Trägerelemente nur eine relativ geringe Dicke aufweisen. Diese tragenden Platten dürfen keinesfalls durchbohrt werden, da deren Unterseite meist auch die Sicht fläche in der entsprechenden Halle ist. Es kommt daher auf ein exaktes Festlegen der Bohrtiefe an, wobei von dem die Bohrarbeiten durchführenden Arbeiter die Oberfläche dieses festen Unterbaues unterhalb der Isolierplatten bzw. -bahnen gar nicht beobachtet werden kann. Es soll aber auch gewährleistet sein, dass trotz der Unzugänglichkeit des anzubohrenden festen Unterbaues das Bohrmehl bzw. das Bohrklein abgesaugt werden kann. Mit einer bekannten Ausführung (DE-A-3237721) kann aber dieses Problem nicht gelöst werden.

Die vorliegende Erfindung hat sich daher zur Aufgabe gestellt, eine Bohrvorrichtung der eingangs genannten Art zu schaffen, mit der ein einfaches und sicheres Festlegen der Bohrtiefe in einem unterhalb von Isolierplatten bzw. -bahnen befindlichen, festen Unterbau mit einer konstruktiv einfachen und störungsarmen Anschlageinrichtung möglich ist.

Erfindungsgemäss gelingt dies dadurch, dass der Bohrer bzw. der Bohrschaft teleskopartig in der Hülse verschiebbar ist, dass das dem Bohrantrieb zugewandte Ende der Hülse mit einem Tiefenanschlag zusammenwirkt, und dass das freie Ende der Hülse als Stützteil zur Anlage an einem zu bohrenden Werkstück ausgebildet ist.

Durch diese erfindungsgemässen Massnahmen wird erreicht, dass die für die Bohrtiefbemessung wirksame Hülse bereits bei Bohrbeginn an dem anzubohrenden Werkstück aufliegt, wobei durch die Ausbildung als Hülse mit gegenüber dem Bohrer nur geringfügig vergrössertem Durchmesser ein einfaches Durchdringen der Isolierplatten bzw. -bahnen möglich ist. Die Hülse bewirkt nach Erreichen der erforderlichen Bohrtiefe nach dem Anliegen an dem Tiefenanschlag, dass der Bohrvorschub beendet wird, wobei nun eben bei der vorliegenden Erfindung dieses Zusammenwirken zwischen Hülse und Tiefenanschlag oberhalb der Isolierplatten bzw. -bahnen erfolgt.

Es ist durch die erfindungsgemässe Bohrvorrichtung im Zusammenwirken mit der Anschlageinrichtung ein sicheres Festlegen der Bohrtiefe möglich, ohne dass dabei die Notwendigkeit besteht, die Oberfläche des anzubohrenden Werkstückes beobachten zu müssen.

Um eine exakte Bohrtiefe zu erreichen, sind die geschilderten erfindungsgemässen Massnahmen von besonderer Bedeutung. Es ist aber auch vorteilhaft, wenn nach dem Herausziehen des Bohrers auch noch die geforderte Bohrtiefe vorhanden ist, dass also die Bohrung nicht teilweise durch das entstandene Bohrmehl angefüllt bleibt. Durch die erfindungsgemässe Konstruktion ist eine Lösung dieses Problems möglich, indem, wie eingangs erwähnt, dem dem Bohrantrieb zugewandten Endbereich der Hülse ein an eine Unterdruckeinrichtung anschliessbarer Anschlussstutzen zugeordnet ist. Es kann daher schon während des Bohrvorganges das vom Bohrer durch die schraubenförmigen Nuten herangeförderte Material abgesaugt werden. Mit einer geringstmöglichen Durchmesservergrösserung der den Bohrer bzw. den Bohrschaft umschliessenden Hülse kann das beim Bohrvorgang entstandene Bohrmehl problemlos abgesaugt werden.

Es sind Bohrvorrichtungen in verschiedenen Ausführungsvarianten bekannt, bei welchen Zusatzeinrichtungen zum Festlegen der Bohrtiefe vorgesehen sind (z.B. US-A-2.335.614). So gibt es verschiedene Einrichtungen, welche bei Erreichen der gewünschten Bohrtiefe an der Werkstückoberfläche zur Anlage kommen und somit einen weiteren Bohrvorschub verhindern. Solche Anschlageinrichtungen weisen in der Regel einen relativ grossen Durchmesser auf oder sind mit entsprechendem Abstand parallel zur Bohrachse verlaufend angeordnet. Solche Anschlageinrichtungen sind daher nur dort geeignet, wo die anzubohrende Werkstückoberfläche frei liegt und daher gut zugänglich ist.

Es sind auch Absaugeinrichtungen für das Bohrmehl mit einer gegenüber dem Bohrer axial verschiebbaren Hülse bekannt (z.B. DE-A-3835582), wobei diese Hülse jedoch keine Funktion als Tiefenanschlag übernimmt und ausserdem einen relativ grossen Aussendurchmesser aufweist, so dass diese Absaugeinrichtung - die zudem noch nahe an dem zu bohrenden Werkstück liegt - für die erfindungsgemässe Aufgabe keinen Lösungsansatz bietet und daher nur bei frei zugänglichen Bohrungen einsetzbar ist.

Weiters wird vorgeschlagen, dass die Hülse gegenüber dem Bohrantrieb gegen Verdrehen gesichert gehalten ist. Es kann dadurch zu keinerlei Beschädigung der Isolierplatten bzw. -bahnen kommen, da kein Material durch eine eventuelle Drehbewegung aufgerissen bzw. mitgewickelt wird.

Eine vorteilhafte Massnahme liegt ferner darin, wenn die Hülse mit ihrem dem Bohrantrieb zugewandten Endbereich in einen Führungsteil eingreift und im Führungsteil entgegen der Kraft einer Feder gegen den Tiefenanschlag verschiebbar geführt ist. Durch die Anordnung dieser Feder wird erreicht, dass die Hülse stets mit Sicherheit an der Oberfläche des anzubohrenden Werkstückes zur Anlage kommt und auch ständig gegen diese gepresst wird, bis der Bohrvorgang beendet ist.

In konstruktiv einfacher Weise ist dabei vorgesehen, dass mit Abstand vom bohrantriebsseitigen Ende der Hülse und im Führungsteil Anschlagbunde vorgesehen sind, zwischen welchen eine Schraubenfeder eingesetzt ist. Sobald die Schraubenfeder zur Gänze zusammengepresst ist, ergibt sich somit ein wirksamer Tiefenanschlag.

Die erfindungsgemässe Bohrvorrichtung mit der Anschlageinrichtung kann in konstruktiv einfacher Weise gefertigt und somit auch als Zusatzteil zu einem üblichen Bohrantrieb ausgebildet werden, da der Führungsteil über Tragbolzen an einem feststehenden Teil eines Bohrantriebes befestigbar ist. Durch diese besondere Konstruktion ergibt sich ferner die Möglichkeit, dass der Führungsteil an den Tragbolzen achsparallel zur Bohrachse verschiebbar und gegenüber diesem verriegelbar ist. Es ist dadurch eine exakte Feineinstellung bzw.

eine Veränderung der erforderlichen Bohrtiefe möglich und ausserdem ist eine einfache Anpassungsmöglichkeit der erfindungsgemässen Einrichtung an verschiedene, handelsübliche Bohrantriebe gegeben.

Damit die Hülse mit dem Bohrer in einfacher Weise durch entsprechend dicke Isolierplatten bzw. -bahnen eingeführt werden kann, wird zweckmässig vorgesehen, dass der Stützteil am freien Ende der Hülse kegelstumpfförmig verjüngt ausläuft.

Damit eine entsprechende zusätzliche Halterung und Führung des Bohrers im Anschluss an den relativ langen Bohrschaft gewährleistet ist, wird vorgeschlagen, dass die Hülse zumindest über den Bereich des Stützteiles annähernd auf den Aussendurchmesser des Bohrers verengt ist.

Eine weitere vorteilhafte Massnahme liegt darin, dass der Bohrschaft als Hohloder Vollprofil ausgebildet ist und an seinem freien Ende eine unrunde und/oder mehreckige Aufnahmeöffnung zur formschlüssigen Halterung eines korrespondierend zur Oeffnung ausgeführten Einspannteiles des Bohrers aufweist. Es ist daher nicht wie sonst üblich, ein Bohrer mit einem derart langen Schaft erforderlich, sondern es kann ein entsprechend kurz ausgeführter Bohrer mit einem Einspannteil versehen werden, der dann in das freie Ende des Bohrschaftes formschlüssig eingesteckt werden kann.

Weitere erfindungsgemässe Merkmale werden in der nachstehenden Beschreibung anhand der Zeichnung noch näher erläutert. Es zeigen:

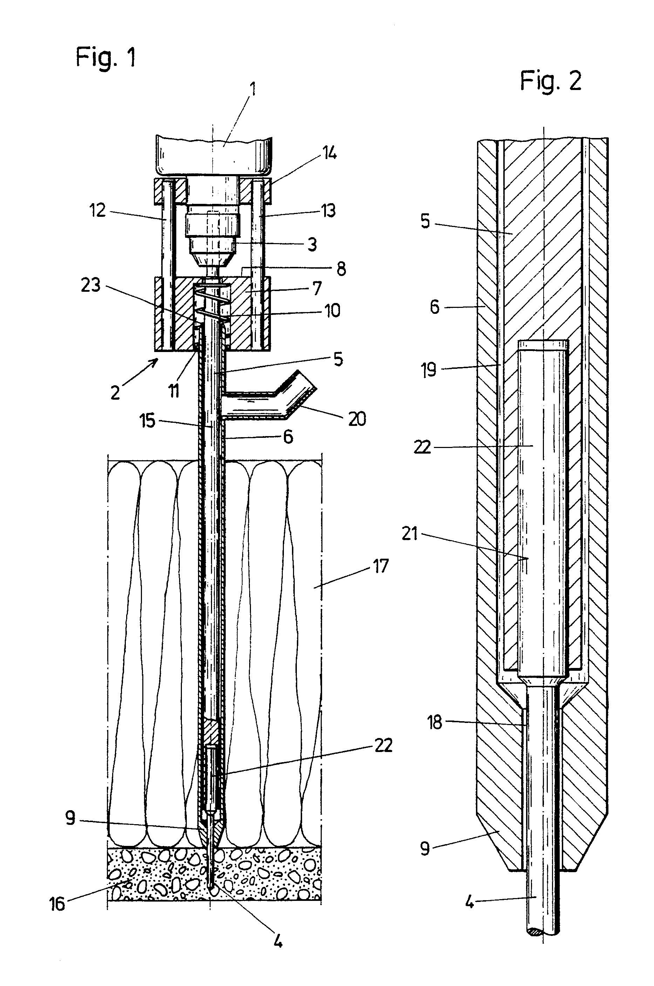

Fig. 1 einen Vertikalschnitt durch eine Bohrvorrichtung mit Anschlageinrichtung in einem Arbeitseinsatz;

Fig. 2 eine vergrösserte Darstellung des freien, bohrerseitigen Endes der Einrichtung.

Die Bohrvorrichtung besteht im wesentlichen aus einem Bohrantrieb 1 und einer Anschlageinrichtung 2. Im Bohrfutter 3 des Bohrantriebes ist entweder direkt ein Bohrer 4 eingespannt oder zweckmässig ein Bohrschaft 5, der an seinem freien Ende den Bohrer 4 aufnimmt. Die Anschlageinrichtung wird im wesentlichen von einer Hülse 6 und einem Führungsteil 7 gebildet, welcher einen Tiefenanschlag aufweist.

Die Hülse 6 umschliesst den Bohrer 4 bzw. den Bohrschaft 5 koaxial, wobei deren freies Ende als Stützteil 9 ausgebildet ist und deren dem Bohrantrieb 1 zugewandtes Ende mit dem Tiefenanschlag 8 im Führungsteil 7 zusammenwirkt. Die Hülse 6 ist gegen Verdrehen gesichert, entweder im Führungsteil 7 oder auf andere Weise gehalten.

Mit ihrem dem Bohrantrieb 1 zugewandten Endbereich greift die Hülse 6 in den Führungsteil 7 ein und ist in diesem Führungsteil 7 entgegen der Kraft einer Schraubenfeder 10 gegen den Tiefenanschlag 8 verschiebbar geführt. Bei der dargestellten Konstruktionsvariante ist die Schraubenfeder 10 koaxial die Hülse 6 umschliessend angeordnet und einerseits an einem den Tiefenanschlag 8 bildenden Bund und andererseits an einem an der Hülse 6 mit Abstand von ihrem Ende angeordneten Anschlagbund 11 abgestützt.

Der Uebersichtlichkeit halber ist der Bohrer 4 in seiner Endstellung, also nach Erreichen der Bohrtiefe dargestellt, wogegen die Hülse 6 in Bezug auf den Führungsteil 7 in der Ausgangsstellung dargestellt ist.

Der Führungsteil 7 ist über Tragbolzen 12 und 13 an einem feststehenden Teil des Bohrantriebes 1 befestigbar, wobei dies beim dargestellten Beispiel ein Spannring 14 ist. Dieser Führungsteil 7 kann an den Tragbolzen 12 und 13 achsparallel zur Bohrachse 15 verschoben werden und ist in der eingestellten Lage jeweils wieder gegenüber den Tragbolzen 12 und 13 verriegelbar. Es ist so eine Veränderung der festzulegenden Bohrtiefe und auch eine Anpassung an verschiedene Bohrantriebe 1 möglich.

Der Stützteil 9 am freien Ende der Hülse 6 läuft kegelstumpfförmig verjüngt aus, so dass ein einfaches Eindrücken der ganzen Bohrvorrichtung samt Hülse 6 in die auf den festen Untergrund 16 aufgelegten Isolierplatten bzw. -bahnen 17 möglich ist.

Die Hülse 6 ist zumindest über den Bereich des Stützteiles 9 annähernd auf den Durchmesser des Bohrers 4 verengt, so dass der Bohrer in diesem Bereich noch eine zusätzliche Führung erfährt.

Zwischen der Hülse 6 und dem Bohrer 4 bzw. der Hülse 6 und dem Bohrschaft 5 ist ein Ringspalt 18 bzw. 19 vorgesehen, und ferner ist an dem dem Bohrantrieb 1 zugewandten Endbereich der Hülse 6 ein Anschlussstutzen 20 angeordnet, an welchen eine Unterdruckeinrichtung anschliessbar ist. Es kann auf diese Weise ständig das beim Bohrvorgang entstehende Bohrmehl abgesaugt werden, so dass auch nach dem Herausziehen des Bohrers die Gewähr gegeben ist, dass die gewünschte Bohrtiefe vorhanden ist, ohne dass ein Teil der Bohrung durch Bohrmehl angefüllt ist. Der Ringspalt 18 im vordersten Bereich des Stützteiles 9 könnte auch weggelassen werden, um dadurch in diesem Bereich eine exaktere Führung für den Bohrer 4 herzustellen. In diesem Bereich weist ja der Bohrer 4 die bei Bohrern übliche schraubenlinienförmige Nut auf, so dass in diesem Bereich noch eine ausreichende Förder- bzw. Abzugsmöglichkeit für das Bohrmehl gewährleistet ist. Der zum Anschluss einer Unterdruckeinrichtung, also einer Absauganlage, vorgesehene Anschlussstutzen kann auch am Führungsteil 7 oder in einer sonstigen Art und Weise angeordnet werden, wobei in einem solchen Falle immer die Absaugung über den Ringspalt 18 erfolgt. Es wäre im Rahmen der Erfindung auch denkbar, einen entsprechenden Absaugkanal an der Aussenseite der Hülse 6 vorzusehen, welcher im Bereich des Stützteiles 9 oder knapp darüber in die Hülse 6 einmündet. Es ist dann jedoch eine grössere Aussenabmessung des durch die Isolierplatten bzw. -bahnen einzudrückenden Teiles gegeben.

Im Rahmen der Erfindung ist es auch möglich, anstelle eines über die ganze Länge der Hülse 6 führenden Ringspaltes bzw. Ringraumes an der Innenwand der Hülse 6 entsprechende Längsnuten vorzusehen, über welche das Bohrmehl abgesaugt werden kann.

Eine weitere vorteilhafte Ausbildung dient zur Halterung eines relativ kurzen Bohrers 4. Zu diesem Zweck ist der Bohrschaft 5 als Hohl- oder Vollprofil ausgebildet und weist an seinem freien Ende eine unrunde und/oder mehreckige Aufnahmeöffnung 21 zur formschlüssigen Halterung eines korrespondierend zur Aufnahme öffnung ausgeführten Einspannteiles 22 des Bohrers 4 auf. Dabei ist es nicht einmal notwendig, den Einspannteil 22 des Bohrers 4 in axialer Richtung in dem Bohrschaft 5 zu sichern, denn dieser ist ja unverlierbar in der Hülse 6 gehalten und wird ausserdem beim Bohrvorgang auf jeden Fall in die hintere Stellung in die Aufnahmeöffnung 21 gedrückt.

In der vorstehenden Beschreibung wurde erläutert, dass nach gänzlichem Zusammendrücken der Schraubenfeder 10 die Endstellung beim Bohrvorschub erreicht wird. Eine weitere Möglichkeit ist dadurch gegeben, wenn das Ende 23 der Hülse 6, welches in den Führungsteil 7 hineinragt, an dem Tiefenanschlag 8 zur Anlage kommt. Es muss dabei die Schraubenfeder 10 nicht unbedingt zur Gänze zusammengedrückt sein.

Im Rahmen der Erfindung sind weitere Ausführungsvarianten möglich, wobei jedoch immer eine den Bohrer 4 bzw. den Bohrschaft 5 koaxial umschliessende Hülse 6 vorgesehen ist, deren freies Ende als Stützteil 9 ausgebildet ist und deren dem Bohrantrieb zugewandtes Ende mit dem Tiefenanschlag 8 zusammenwirkt.

**Ansprüche**

1. Bohrvorrichtung mit einer einen Bohrer (4) bzw. einen den Bohrer (4) tragenden Bohrschaft (5) koaxial umschliessenden Hülse (6), wobei zwischen Hülse (6) und Bohrer (4) bzw. Bohrschaft (5) zumindest über einen Teilbereich deren Länge durchgehende Kanäle freibleiben, und wobei dem dem Bohrantrieb (1) zugewandten Endbereich der Hülse (6) ein an eine Unterdruckeinrichtung anschliessbarer Anschlussstutzen (20) zugeordnet ist, dadurch gekennzeichnet, dass der Bohrer (4) bzw. der Bohrschaft (5) teleskopartig in der Hülse (6) verschiebbar ist, dass das dem Bohrantrieb (1) zugewandte Ende der Hülse (6) mit einem Tiefenanschlag (8) zusammenwirkt, und dass das freie Ende der Hülse (6) als Stützteil zur Anlage an einem zu bohrenden Werkstück (16) ausgebildet ist.

2. Bohrvorrichtung nach Anspruch 1, dadurch gekennzeichnet, dass die Hülse (6) gegenüber dem Bohrantrieb (1) gegen Verdrehen gesichert gehalten ist.

3. Bohrvorrichtung nach den Ansprüchen 1 und/oder 2, dadurch gekennzeichnet, dass die Hülse (6) mit ihrem dem Bohrantrieb (1) zugewandten Endbereich in einen Führungsteil (7) eingreift und im Führungsteil (7) entgegen der Kraft einer Feder (10) gegen den Tiefenanschlag (8) verschiebbar geführt ist.

4. Bohrvorrichtung nach Anspruch 3, dadurch gekennzeichnet, dass mit Abstand vom bohrantriebsseitigen Ende (23) der Hülse (6) und im Führungsteil (7) Anschlagbunde (14, 8) vorgesehen sind, zwischen welchen eine Schraubenfeder (10) eingesetzt ist.

5. Bohrvorrichtung nach den Ansprüchen 3 und 4, dadurch gekennzeichnet, dass der Führungsteil (7) über Tragbolzen (12, 13) an einem feststehenden Teil des Bohrantriebes (1) befestigbar ist.

6. Bohrvorrichtung nach Anspruch 5, dadurch gekennzeichnet, dass der Führungsteil (7) an den Tragbolzen (12, 13) achsparallel zur Bohrachse (15) verschiebbar und gegenüber diesen verriegelbar ist.

7. Bohrvorrichtung nach den Ansprüchen 1 und 2, dadurch gekennzeichnet, dass der Stützteil (9) am freien Ende der Hülse (6) kegelstumpfförmig verjüngt ausläuft.

8. Bohrvorrichtung nach den Ansprüchen 1 und 2, dadurch gekennzeichnet, dass die Durchgangsbohrung der Hülse (6) zumindest über den Bereich des Stützteiles (9) annähernd auf den Aussendurchmesser des Bohrers (4) verengt ist.

9. Bohrvorrichtung nach Anspruch 1 und einem der vorhergehenden Ansprüche, dadurch gekennzeichnet, dass der Bohrschaft (5) als Hohl- oder Vollprofil ausgebildet ist und an seinem freien Ende eine unrunde und/oder mehreckige Aufnahmeöffnung (21) zur formschlüssigen Halterung eines korrespondierend zur Aufnahmeöffnung (21) ausgeführten Einspannteiles (22) des Bohrers (4) aufweist.

Fig. 1

Fig. 2